# EUROPÄISCHE PATENTSCHRIFT

(11) **EP 2 103 984 B1**
(45) Veröffentlichungstag und Bekanntmachung des Hinweises auf die Patenterteilung: **24.04.2013**
(21) Anmeldenummer: 09155344.6
(22) Anmeldetag: 17.03.2009
(51) Int. Cl.: G06T 5/00, G06K 9/00, G06T 7/00

(54) **Verfahren und Vorrichtung zum Verarbeiten von Bilddaten**
Method and device for processing image files
Procédé et dispositif de traitement de données d'image

(30) Priorität: 17.03.2008 DE 102008014630
(43) Veröffentlichungstag der Anmeldung: 23.09.2009
(73) Patentinhaber: Hella KGaA Hueck & Co., 59552 Lippstadt (DE)
(72) Erfinder: Hoffman, Ingo, 10437 Berlin (DE)
(74) Vertreter: Schaumburg, Thoenes, Thurn, Landskron, Eckert

(56) Entgegenhaltungen:
- EP-A2- 1 513 103
- EP-A2- 1 837 803
- US-A1- 2005 147 313
- "13.7 Discrete Restoration Models" In: William K. Pratt: "Digital Image Processing", 1978, John Wiley & Sons, New York, XP002659795, ISBN: 0-471-01888-0 Seiten 370-377, * das ganze Dokument * * *

## Beschreibung

Die Erfindung betrifft ein Verfahren und eine Vorrichtung zum Verarbeiten von Bilddaten mindestens eines mit Hilfe einer Bilderfassungseinheit bildpunktweise erfassten Bildes, wobei die Bilderfassungseinheit mindestens einen Bilderfassungssensor mit rasterförmig angeordneten Bildpunkterfassungsbereichen aufweist.

Zum Klassifizieren von Objekten, insbesondere zum Klassifizieren von Leuchten, werden potentielle Objekte in aufgenommenen Bildern detektiert. Dies ist insbesondere sinnvoll und erforderlich, wenn Bilddaten mit Hilfe von in Kraftfahrzeugen angeordneten Bilderfassungseinheiten erfassten Bildern von der Umgebung des Kraftfahrzeugs verarbeitet werden, um zumindest ein Teil der sich im Umfeld des Kraftfahrzeugs befindlichen Objekte zu detektieren und zu klassifizieren. Übliche in Kraftfahrzeugen angeordnete bzw. mit Kraftfahrzeugen verbundene Bilderfassungseinheiten sind monokulare Kameras oder Stereokameras, die Farb-und/oder Graustufenbilder erfassen. Dabei werden sowohl Objekte detektiert und klassifiziert, die sich aufgrund ihrer Lichtreflektionseigenschaften von ihrer Umgebung unterscheiden als auch Objekte, die eine eigene Lichtquelle aufweisen. So sollen insbesondere bei Dunkelheit Rücklichter und/oder Bremslichter sowie Positionierungsleuchten von Fahrzeugen als Objekte detektiert werden. Solche Objekte können sicher erkannt werden, wenn deren Abbildung auf einer Sensorfläche der Bilderfassungeinheit auf mehreren Bildpunkterfassungsbereichen abgebildet wird, sodass die Position und die Helligkeit dieser Objekte hinreichend genau bestimmt werden können. Diese Informationen können z. B. in einem Fahrerassistenzsystem genutzt werden, das in Abhängigkeit vom vorausfahrenden Verkehr die Lichtverteilung des eigenen Scheinwerfersystems anpasst. Dazu werden aufgrund der ermittelten Informationen insbesondere Lichtquellen vorausfahrender und entgegenkommender Fahrzeuge ermittelt und als Rücklichter, Bremslichter, Scheinwerfer, Rückfahrleuchten, Blinkleuchten und/oder Begrenzungsleuchten klassifiziert. Je weiter entfernt sich das Objekt von dem Bilderfassungssensor befindet und desto kleiner die lichtabstrahlende Fläche bzw. die lichtreflektierende Fläche des Objekts ist, umso kleiner ist die Objektabbildung auf der Sensorfläche des Bilderfassungssensors. Die optischen Systeme von üblichen Bilderfassungseinheiten weisen eine Punktübertragungsfunktion auf, die eine Intensitätsverteilung des auftreffenden Lichts bewirkt. Durch die bei der Bilderfassungseinheit vorgesehene Punktübertragungsfunktion wird ein punktförmiges Objekt auf einer Fläche von mindestens einem Bildpunkterfassungsbereich abgebildet. Die Abbildung eines weit entfernten Objekts kann sowohl eine kleine Abmessung als ein Bildpunkt haben als auch auf mehrere Bildpunkterfassungsbereiche erfolgen, so dass eine Intensitätsverteilung des von diesem Objekt abgestrahlten Lichts auf mindestens zwei benachbarte Bildpunkterfassungsbereiche erfolgt. So kann bei einer solchen Abbildung des Objekts die Größe, die Intensität und die Position der Abbildung des Objekts auf der Sensoroberfläche nicht hinreichend genau ermittelt werden. Derzeit werden die Informationen solcher Abbildungen nicht weiter verarbeitet, da diese Information für die Bewertung der Abbildung und der Klassifizierung des Objekts nicht ausreichend sind.

Derartige Systeme werden z.B. in der EP-A-1 313 103 und der EP-A-1 837 803 beschriben.

Aufgabe der Erfindung ist es, ein Verfahren und eine Vorrichtung zum Verarbeiten von Bilddaten anzugeben, durch die auch Angaben über Objekte ermittelt werden können, deren Abbildungen ohne eine Intensitätsverteilung des optischen Systems der Bilderfassungseinheit auf einer Fläche kleiner gleich einem Bildpunkterfassungsbereich abgebildet werden würden.

Diese Aufgabe wird durch ein Verfahren mit den Merkmalen des Patentanspruchs 1 und durch eine Vorrichtung mit den Merkmalen des Patentanspruchs 14 gelöst. Vorteilhafte Weiterbildungen der Erfindung sind in den abhängigen Patentansprüchen angegeben.

Durch ein Verfahren mit den Merkmalen des Patentanspruchs 1 wird erreicht, dass die tatsächliche Abbildungsgröße des Objekts und/oder die tatsächliche Position der Abbildung des Objekts ohne die durch das optische System der Bilderfassungseinheit verursachte Intensitätsverteilung auf einfache Art und Weise ermittelt werden kann. Mit Hilfe der ermittelten Abbildungsgröße, der ermittelten Intensität und der ermittelten Position der Abbildung kann dann eine Klassifizierung des Objekts durchgeführt werden. Vorzugsweise werden zur Klassifizierung weitere Informationen genutzt. Der Klassifikator kann dabei mindestens eine plausible Klassifizierung des Objekts durchführen und eine Hypothese, dass es sich bei dem Objekt um ein Objekt einer definierten Objektklasse handelt, mit einer ermittelten Wahrscheinlichkeit angeben, oder eine Hypothese, dass es sich bei dem Objekt um ein Objekt einer Objektklasse handelt aufstellen und/oder bestätigen.

Vorteilhaft ist es, den Verlauf des Farb- und/oder Helligkeitswertes über mindestens zwei benachbarte Bildpunkterfassungsbereiche zu ermitteln, vorzugsweise über eine Matrix von 2x2, 3x3, 4x4, 5x5 oder 6x6 benachbarten Bildpunktbereichen. Ferner kann die Intensitätsverteilung der vom Objekt abgestrahlten Lichtstrahlen auf mindestens zwei benachbarte Bildpunktbereiche erfolgen, wobei diese Intensitätsverteilung durch die Aberration bzw. die Aberrationen des optischen Systems der Bilderfassungseinheit beim Abbilden von Objekten verursacht wird.

Bei einer Weiterbildung der Erfindung kann mindestens ein Vergleichsamplitudenwert des tatsächlichen Helligkeitswertes voreingestellt werden, wobei die durch die Intensitätsverteilung auf die mindestens zwei Bildpunkterfassungsbereiche verteilte Lichtmenge des vom abgebildeten Objekt abgestrahlten und auf diese Bildpunkterfassungsbereiche auftreffenden Lichts ermittelt wird. Abhängig von dem Vergleichsamplitudenwert wird die tatsächliche Abbildungsgröße des Objekts ermittelt. Dazu wird insbesondere die gesamte mit Hilfe der Bildpunkterfassungsbereiche ermittelte Lichtmenge ermittelt, wobei die Lichtmenge auf den voreingestellten Vergleichsamplitudenwert bezogen und die tatsächliche Abbildungsfläche des Objekts auf der Sensorfläche ermittelt wird.

Der Vergleichsamplitudenwert kann dabei der Mindeststärke, der zulässigen Maximallichtstärke und/oder der üblichen Lichtstärke einer Leuchte eines Kraftfahrzeugs entsprechen. Als Mindestlichtstärke und als zulässige Maximallichtstärke können in den ECE-Regelungen und/oder in den von der Society of Automotive Engineers herausgegebenen Regelungen angegebenen Werte verwendet werden. Die übliche Lichtstärke kann der durchschnittlichen Lichtstärke einer Leuchte von aktuellen PKW-und/oder LKW-Modellen entsprechen. Die Leuchte ist insbesondere eine Schlussleuchte, Bremsleuchte, Begrenzungsleuchte, Blinkleuchte, ein Scheinwerfer und/oder eine weitere Leuchte eines Kraftfahrzeugs.

Ferner ist es vorteilhaft, aufgrund der Lichtverteilung des vom Objekt abgestrahlten auf die mindestens zwei Bilderfassungsbereiche auftreffenden Lichts eine Position der Abbildung des Objekts auf der Sensoroberfläche unabhängig von den rasterförmig angeordneten Bildpunkterfassungbereichen oder durch die Angabe der Position der Abbildung mit Hilfe mindestens eines Subbildpunkterfassungsbereichs zu bestimmen. Dadurch kann die Position der ermittelten Abbildung des Objekts relativ genau angegeben und zur Weiterverarbeitung genutzt werden.

Ferner ist es vorteilhaft, mehrere Vergleichsamplitudenwerte voreinzustellen, die jeweils der Lichtstärke einer Leuchte und/oder einer Mindestlichtstärke, zulässigen Maximallichtstärke und/oder üblichen Lichtstärke einer Kraftfahrzeugleuchte entsprechen. Dadurch kann einfach überprüft werden, ob es sich bei dem ermittelten Objekt um eine solche Kraftfahrzeugleuchte handelt. Dabei können die Bildinformationen insbesondere mit jeder der Vergleichsamplitudenwerte verarbeitet werden, wobei dadurch jeweils eine Hypothese, dass es sich bei dem abgebildeten Objekt um eine solche Leuchte handelt, angenommen und bei der weiteren Bewertung des Objekts verifiziert wird. Die parallele Verfolgung mehrerer Hypothesen kann dabei in parallelen Verarbeitungsvorgängen als auch nacheinander oder im Multitaskingbetrieb erfolgen.

Ferner kann die tatsächliche Abbildungsgröße der Abbildung des Objekts auf der Sensorfläche und/oder die tatsächliche Position des Objekts auf der Sensorfläche ermittelt werden. Mit Hilfe dieser Größe und/oder Position der Abbildung des Objekts auf der Sensorfläche kann ein Klassifizierungsverfahren zum Klassifizieren des Objekts durchgeführt werden. Die Abbildungsgröße und/oder Position bezogen auf die Sensorfläche kann dabei einfach weiterverarbeitet werden.

Weiterhin kann die tatsächliche Position der Abbildung des Objekts auf der Sensorfläche auch bei einer mit Hilfe mindestens einer bekannten Aberration des optischen Systems der Bilderfassungseinheit und dem ermittelten Verlauf des Farb- und/oder Helligkeitswertes ermittelt werden.

Die Bildpunkterfassungsbereiche bilden vorzugsweise die Sensoroberfläche des Bilderfassungssensors und sind in einer Bildebene der Bilderfassungseinheit angeordnet. Das optische System der Bilderfassungseinheit bildet die Abbildung der Objekte in der Bildebene vorzugsweise scharf ab, sodass die Objekte relativ scharf auf der Sensoroberfläche abgebildet werden. Dadurch ist eine Weiterverarbeitung der Bilddaten durch relativ scharfe Objektkanten einfach möglich.

Zum Ermitteln der tatsächlichen Abbildungsgröße der Abbildung des Objekts und/oder zum Ermitteln der tatsächlichen Position des Objekts wird bei vorteilhaften Ausführungsformen der Erfindung ein Dekonvolutionsverfahren genutzt. Dadurch kann unter Berücksichtigung einer bekannten Aberation, insbesondere der Punktverteilungsfunktion, des optischen Systems der Bilderfassungseinheit Rückschlüsse auf die Abbildungsgröße und/oder Abbildungsposition der Abbildung des Objekts gezogen werden.

Vorzugsweise wird das Bild mit Hilfe einer in einem Kraftfahrzeug angeordneten Bilderfassungseinheit erfasst, insbesondere mit Hilfe einer monokularen Frontkamera oder einer Stereokamera. Dadurch können einfach Objekte in den vom Umfeld des Kraftfahrzeugs aufgenommenen Bildern detektiert und bewertet werden. Mit Hilfe der detektierten und verifizierten Objekte können Informationen über diese Objekte von Fahrerassistenzsystemen des Kraftfahrzeugs weiterverarbeitet werden. Die Bilderfassungseinheit kann insbesondere mehrere Bilder nacheinander aufnehmen, deren Bilddaten wiederholt verarbeitet werden. Die tatsächliche Position der Abbildung des Objekts kann dann in den aufgenommenen Bildern ermittelt und über mehrere nacheinander aufgenommene Bilder verfolgt werden. Dazu wird vorzugsweise ein bekanntes Trackingverfahren genutzt.

Die Vorrichtung mit den Merkmalen des Patentanspruchs 14 kann auf die gleiche Weise weitergebildet werden, wie für das Verfahren mit den Merkmalen des Patentanspruchs 1 angegeben, wobei mit dieser Vorrichtung die gleichen Vorteile erzielt werden, wie in Zusammenhang mit dem Verfahren erläutert. Insbesondere kann die Vorrichtung mit den Merkmalen des Patentanspruchs 14 mit den zur Weiterbildung des Verfahrens nach Patentanspruch 1 in den jeweiligen abhängigen Patentansprüchen angegebenen Merkmalen bzw. entsprechenden Vorrichtungsmerkmalen weitergebildet werden.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: ein Blockdiagramm eines Systems zur Bildaufnahme und Bildauswertung der Umgebung eines Kraftfahrzeugs,
- Figur 2: ein Diagramm mit der Abhängigkeit der Intensität der Strahlungsenergie des auf die Sensoroberfläche eines Bilderfassungssensors auftreffenden Lichts von der Entfernung eines Objekts zur Sensoroberfläche,
- Figur 3: ein Diagramm einer Abhängigkeit der Größe der Abbildung des Objekts von der Entfernung des Objekts zur Sensoroberfläche,
- Figur 4: ein Diagramm mit einer Abhängigkeit des von den Bildpunkterfassungselementen ermittelten Helligkeits- bzw. Grauwertes von der Entfernung zwischen Sensoroberfläche und dem Objekt,
- Figuren 5 bis 7: die Abbildung von Objekten in Abhängigkeit der Entfernung des Objekts zur Sensoroberfläche eines Bilderfassungssensors,
- Figuren 8 bis 11: eine Kette der Übertragungsglieder zur Abbildung des Objekts auf der Sensoroberfläche der Bilderfassungseinheit sowie zum Erzeugen und Ausgeben von den der Abbildung entsprechenden Helligkeitswerten, und
- Figuren 12 bis 14: eine modellgestützte Rekonstruktion einiger Merkmale des Objekts.

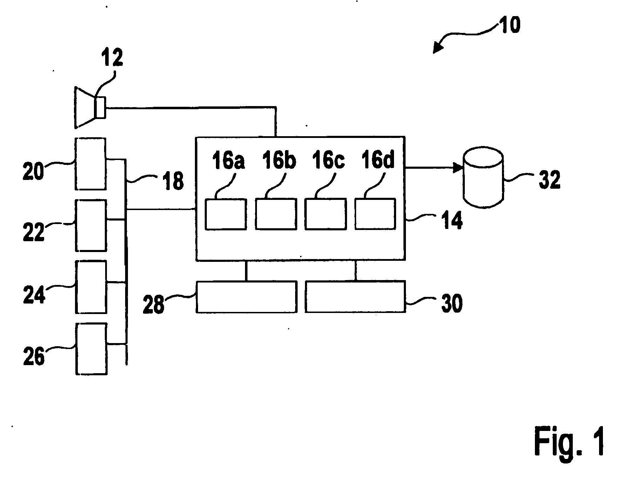

In Figur 1 ist ein Blockdiagramm eines Bildaufnahme- und Auswertesystems 10 dargestellt, das in ein Kraftfahrzeug, insbesondere in einen PKW oder einen LKW, integriert ist. Das Bildaufnahme- und Auswertesystem 10 umfasst ein Kamerasystem 12, das eine Bildfolge mit Abbildungen zumindest eines Bereichs vor dem Fahrzeug erfasst und jeweils entsprechende Bilddaten erzeugt. Diese Bilddaten werden zu einer Bildverarbeitungseinheit 14 des Systems 10 übertragen und mit Hilfe von Steuerungs-und Verarbeitungsmodulen 16a bis 16d der Bildverarbeitungseinheit 14 analysiert und verarbeitet.

Die Bildverarbeitungseinheit 14 ist über einen Fahrzeugbus 18 des Fahrzeugs mit weiteren Steuer- und Verarbeitungseinheiten 20 bis 26, wie dem Navigationssystem, dem Geschwindigkeitserfassungs- und/oder Regelungssystem, des Fahrzeugs verbunden, wobei die Bildverarbeitungseinheit 14 über den Fahrzeugbus 18 Daten mit diesen weiteren Steuereinheiten 20 bis 26 austauschen kann. Die Bildverarbeitungseinheit 14 ist weiterhin über eine geeignete Datenleitung mit einer Anzeige- und Warneinheit 28 sowie mit einer Geschwindigkeitsregel- und/oder Begrenzungssteuerung 30 verbunden. Ferner ist die Bildverarbeitungseinheit 14 über eine Datenleitung mit einem Permanentspeicher 32 verbunden. Ein solcher Permanentspeicher 32 kann beispielsweise ein Festplattenspeicher, ein Flashspeicher oder eine weitere Steuereinheit sein. Ferner kann der Permanentspeicher 32 auch durch ein Datenbanksystem des Kraftfahrzeugs bereitgestellt werden. Das Kamerasystem 12 kann eine Monokamera (monokulare Kamera), mehrere Monokameras, ein Stereokamerasystem und/oder mehrere Stereokamerasysteme umfassen, wobei die einzelnen Kameras Graustufenbilder oder Farbbilder erzeugen. Als Fahrzeugbus 18 können übliche bekannte Bussysteme, wie ein LIN-Bus, ein CAN-Bus und/oder ein Flexray-Bus, eingesetzt werden. Die optischen Systeme der Kamera bzw. der Kameras des Kamerasystems 12 können insbesondere verschiedene Festbrennweiten oder eine insbesondere über ein Revolver-Objektivsystem oder ein Varioobjektivsystem einstellbare Brennweite aufweisen.

Über den Fahrzeugbus 18 kann die Bildverarbeitungseinheit 14 auch mit weiteren Sensoren und Empfangseinheiten kommunizieren, die insbesondere eine Ad-hoc-Kommunikation mit weiteren Fahrzeugen und/oder mit Verkehrseinrichtungen, wie Lichtsignalanlagen, Schilderbrücken und/oder einzelnen Verkehrsschildern, aufnehmen können. Ferner werden über den Fahrzeugbus 18 Informationen über Signalzustände einzelner Aktoren und Sensoren, insbesondere über die Aktivierung der Fahrtrichtungsanzeiger des Fahrzeugs, übertragen.

Mit Hilfe der durch das Kamerasystem 12 aufgenommenen Bildfolge werden durch eine Analyse der Bilddaten mit Hilfe der Bildverarbeitungseinheit 14 die Objekte im Erfassungsbereich des Kamerasystems 12 detektiert und klassifiziert. Durch das Klassifizieren der Objekte mit Hilfe eines geeigneten Erkennungsverfahrens werden Verkehrszeichen, Verkehrsleiteinrichtungen und/oder weitere Verkehrsteilnehmer, insbesondere vorausfahrende und entgegenkommende Fahrzeuge, detektiert und klassifiziert. Diese erkannten Objekte sowie ggf. vorhandene weitere Informationen über diese Objekte können dann von mindestens einem Fahrerassistenzsystem weiterverarbeitet werden. Vorteilhaft ist die Weiterverarbeitung durch ein Bremsassistenzsystem, ein lichtsteuerndes Assistenzsystem, ein Abstandswarn- und/oder -regelsystem.

Ein weiteres Verarbeitungs- und Steuerungsmodul 16a bis 16d der Bildverarbeitungseinheit 14 kann aufgrund der Abbildungen der Bildfolge die aktuelle Fahrspur des Fahrzeugs und/oder die Fahrspur eines als Objekt detektierten vorausfahrenden Fahrzeugs oder entgegenkommenden Fahrzeugs ermitteln.

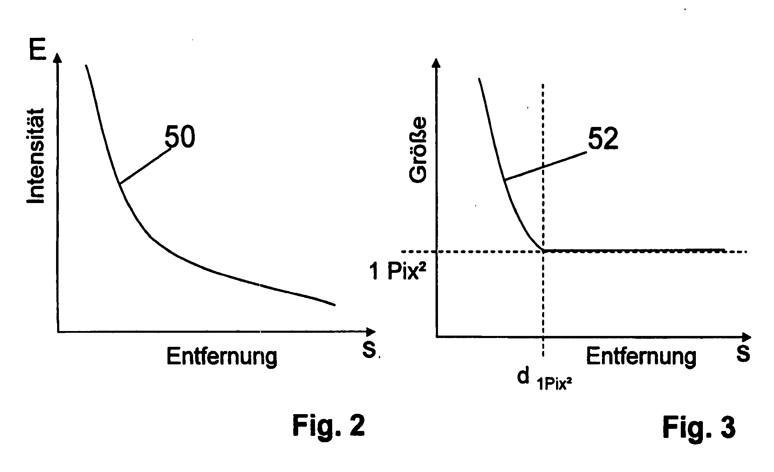

In Figur 2 ist ein Diagramm dargestellt, das die Abhängigkeit der Intensität der Strahlungsenergie bzw. der Bestrahlungsstärke des auf die Sensoroberfläche eines Bilderfassungssensors des Kamerasystems 12 auftreffenden eine Abbildung eines Objekts erzeugenden Lichts von der Entfernung des Objekts zur Sensoroberfläche zeigt. Der Graph 50 zeigt den Verlauf der Intensitätsabnahme der Strahlungsenergie einer Strahlungsquelle mit der zunehmenden Entfernung der Strahlungsquelle bzw. des Objekts zur Sensoroberfläche des Bilderfassungssensors. Die Strahlungsquelle ist insbesondere eine Leuchte eines Kraftfahrzeugs.

In Figur 3 ist ein Diagramm dargestellt, in dem die Größe der Abbildung des Objekts in Abhängigkeit der Entfernung des Objekts zur Sensoroberfläche dargestellt ist. Der Verlauf des Graphen 52 zeigt dabei, dass die Größe der Abbildung des Objekts nur soweit mit Hilfe des Bilderfassungssensors erfassbar ist, bis die Größe der Abbildung die Fläche eines Bildpunkterfassungselements unterschreitet. Bei einer Größe der Abbildung kleiner der Fläche eines Bildpunkterfassungselements erfolgt die Abbildung des Objekts nur auf einem Teil eines Bildpunkterfassungselements.

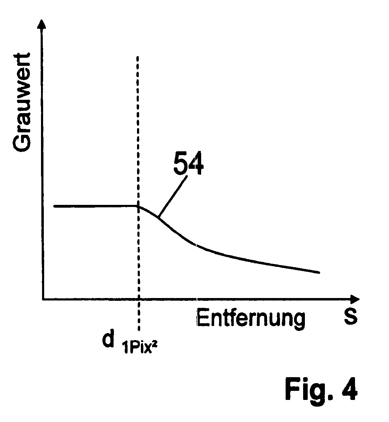

In Figur 4 ist ein Diagramm mit einer Abhängigkeit des von den Bildpunkterfassungselementen ermittelten Helligkeits- bzw. Grauwertes von der Entfernung zwischen Sensoroberfläche und dem Objekt dargestellt. Bei geringer Entfernung des Objekts zur Sensoroberfläche erfolgt die Abbildung des Objekts auf mehrere Bilderfassungsbereiche. Dadurch gibt jedes Bildpunkterfassungselement, dessen Bildpunkterfassungsbereich vollständig von der Abbildung des Objekts überdeckt ist, einen konstanten maximalen Helligkeitswert aus. Wird die Abbildung des Objekts bei zunehmender Entfernung nur noch auf einem Teil des Bildpunkterfassungsbereichs eines Bildpunkterfassungselements abgebildet, ist die auf diesen Teilbereich des Bildpunkterfassungselements auftreffende Strahlungsenergie zwar konstant, jedoch wird vom Bildpunkterfassungselement nur der über den gesamten Bilderfassungsbereich des Bildpunkterfassungselements gemittelter Helligkeits- bzw. Grauwert ausgegeben. Die dadurch bewirkte Änderung der Helligkeit ist durch den Graphen 54 dargestellt, bei dem der Helligkeitswert abfällt, nachdem die Entfernung zwischen Objekt und Sensoroberfläche so zugenommen hat, dass die Abbildung an der mit d_{1Pix²} gekennzeichneten Stelle die Abbildung des Objekts nur noch einen Teil des Bilderfassungsbereichs des Bildpunkterfassungselements erfolgt. Bei dem Ausführungsbeispiel nach Figur 4 ist ein Absinken der Helligkeit dargestellt, wenn die Abbildung des Objekts kleiner als der Bildpunkterfassungsbereich des Bildpunkterfassungselements ist. Dies ist der Fall, wenn die Umgebung des Objekts dunkler als das Objekt selbst ist. In anderen Ausführungsbeispielen ist die Umgebung des Objekts heller als das Objekt selbst, sodass dann ein Anstieg der Helligkeit ab der Stelle d_{1Pix²} erfolgt.

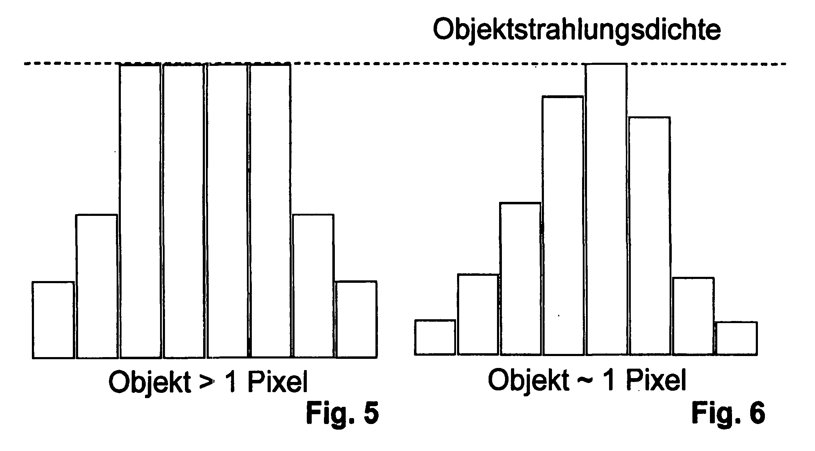

In den Figuren 5 bis 7 ist die Abbildung von Objekten in Abhängigkeit der Entfernung des Objekts zur Sensoroberfläche eines Bilderfassungssensors des Kamerasystems 12 dargestellt. In Figur 5 sind die Helligkeitswerte von acht benachbarten Bildpunkterfassungsbereichen dargestellt, wobei das Objekt eine solche Größe und eine so geringe Entfernung zum Kamerasystem 12 aufweist, dass vier benachbarte Bildpunkterfassungsbereiche vollständig von der Abbildung des Objekts überdeckt sind und jeweils einen dem vom Objekt abgestrahlten Licht entsprechenden Grauwert ausgeben. Dadurch ist sowohl die Abmessung als auch die Position des Objekts bzw. der Abbildung des Objekts auf der Sensoroberfläche, einfach bestimmbar.

In Figur 6 hat das Objekt eine größere Entfernung zum Kamerasystem 12, sodass die Abbildung des Objekts von den acht benachbarten Bildpunkterfassungsbereichen nur den fünften Bildpunkterfassungsbereich vollständig bedeckt. Dadurch kann die Position und die Größe der Abbildung des Objekts auf der Sensoroberfläche noch hinreichend genau bestimmt werden.

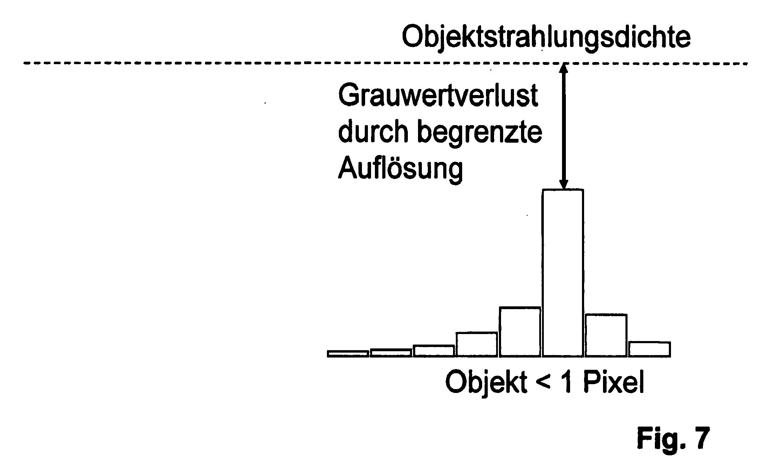

In Figur 7 ist das Objekt gegenüber den Figuren 5 und 6 in einer noch größeren Entfernung zum Kamerasystem 12 angeordnet, sodass die Abbildung des Objekts nur mit einer relativ geringen erfassten durchschnittlichen Strahlungsstärke auf den benachbarten Bildpunkterfassungselementen abgebildet wird. Keines der Bildpunkterfassungselemente kann dadurch die tatsächliche Strahlungsstärke des vom Objekt abgestrahlten Lichts ermitteln, sodass weder die korrekte Helligkeit noch die korrekte Größe der Abbildung des Objekts oder die korrekte Position der Abbildung des Objekts auf der Sensoroberfläche des Bilderfassungssensors ermittelt werden kann.

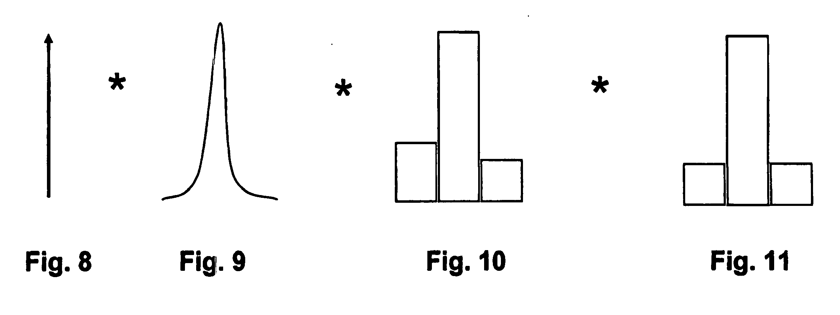

In den Figuren 8 bis 11 ist die Kette der Übertragungsglieder zur Abbildung des Objekts auf der Sensoroberfläche der Bilderfassungseinheit sowie zum Erzeugen und Ausgeben von den der Abbildung entsprechenden Helligkeitswerten schematisch dargestellt. In Figur 8 ist das Objekt selbst schematisch dargestellt. Die Abbildung des Objekts wird durch das optische System des Kamerasystems 12 bzw. durch deren Punktübertragungsfunktion derart verändert, dass eine in Figur 9 gezeigte Intensitätsverteilung des vom Objekt abgestrahlten und dem optischen System des Kamerasystems 12 zugeführten Lichts bewirkt wird. Durch diese Intensitätsverteilung wird ein punktförmiges Objekt auf mindestens ein Bildpunkterfassungselement oder mehrere benachbarte Bildpunkterfassungselemente abgebildet. Das im vorliegenden Ausführungsbeispiel auf drei benachbarte Bildpunkterfassungselemente auftreffende Licht ist in Figur 10 dargestellt, wobei auf das mittlere Bildpunkterfassungselement die größte Lichtmenge entsprechend der in Figur 9 dargestellten Lichtverteilungsfunktion fällt. Nach einem weiteren durch die Digitalisierung der auftreffenden Lichtmenge verursachten Informationsverlust werden als Ausgangssignal bzw. als Bilddaten für die drei benachbarten Bildpunkterfassungselemente die in Figur 11 schematisch dargestellten Helligkeitswerte ausgegeben. Dabei ist erkennbar, dass für das linke Bildpunkterfassungselement und das rechte Bildpunkterfassungselement die gleichen Helligkeitswerte ausgegeben werden, obwohl auf diese Bildpunkterfassungselemente unterschiedliche Lichtmengen aufgetroffen sind, wie dies in Figur 10 dargestellt ist. Jedoch ist dieser Unterschied durch die Digitalisierung bzw. durch die Auflösung des digitalisierten Signals nicht mehr als Information im Ausgangssignal enthalten. Übliche Bilderfassungssysteme und Kamerasysteme 12 haben eine Auflösung von 256 bis 4095 Graustufen, sodass die ermittelten Helligkeitswerte auf diese Graustufen normiert werden müssen. Diese Normierung führt zu einem mit Hilfe der Figuren 10 und 11 dargestellten Informationsverlust.

Mit dem in Figur 11 dargestellten Ausgangssignal ist im Stand der Technik eine hinreichend genaue Bestimmung der Objekteigenschaften des in Figur 8 dargestellten Objekts nicht ermittelbar. Insbesondere können die Position der Abbildung des Objekts auf der Sensoroberfläche und die Größe der Abbildung des Objekts auf der Sensoroberfläche nicht hinreichend genau ermittelt werden.

Die Erfindung geht zum Ermitteln der Größe der Abbildung des Objekts vorzugsweise von der Annahme aus, dass die Lichtstärke bzw. die Mindestlichtstärke einer Leuchte bzw. Lichtquelle als Eigenschaft der Lichtquelle konstant und unabhängig von der Entfernung zwischen Lichtquelle und Sensoroberfläche ist. Wird diese angenommene Lichtstärke unterstellt, kann aufgrund der gesamten auf den benachbarten Bildelementen durch die Abbildung des Objekts auftreffenden Lichtmenge, die tatsächliche Größe und/oder die tatsächliche Position der Abbildung des Objekts ermittelt werden. Als gesamte auf die Bildelemente durch die Abbildung des Objekts auftreffende Lichtmenge wird dabei vorzugsweise der Helligkeitsunterschied zu weiteren benachbarten Bildpunktelementen ermittelt, auf denen die Abbildung des Objekts nicht abgebildet wird. Die tatsächliche Größe, d. h. die tatsächliche Fläche, der Abbildung auf der Sensoroberfläche kann dadurch einfach berechnet werden. Mit Hilfe dieser Information kann insbesondere die Objektgröße selbst oder das Verhältnis der Größe des Objekts zu einem Abstand oder zur Größe eines weiteren detektierten Objekts ermittelt werden. Dadurch kann insbesondere die Größe einer Rückleuchte in Bezug auf den Abstand von zwei Rückleuchten eines Kraftfahrzeugs ermittelt und auf Plausibilität geprüft werden.

Ferner kann durch die Lichtverteilung auf verschiedene benachbarte Bildpunktbereiche die tatsächliche Position der Abbildung des Objekts auf der Sensoroberfläche bestimmt werden. Diese Position kann als Koordinate angegeben oder bei Unterteilung der rasterförmigen Bildpunktelemente in Subbildpunktelemente mit Hilfe der Koordinaten dieser Subbildpunktelemente angegeben werden.

Die Intensitätsverteilung wird insbesondere durch eine Aberration oder durch mehrere Aberrationen des optischen Systems des Kamerasystems 12 verursacht.

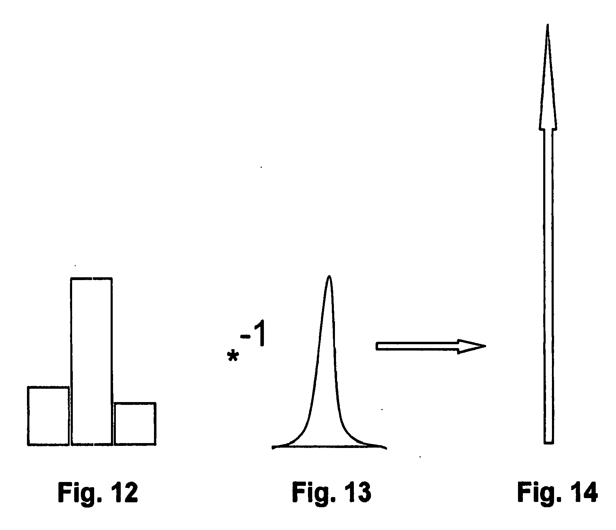

In den Figuren 12 bis 14 ist eine modellgestützte Rekonstruktion einiger Merkmale des Objekts in Figur 12 gezeigten dargestellt, dessen Abbildung mit Hilfe des Kamerasystems 12 erfasst worden ist, wobei drei Bildpunkterfassungselemente des Kamerasystems 12 die durch die Abbildung des Objekts verursachten Helligkeitswerte erfassen und ausgeben.

In Figur13 ist die Punktverteilungsfunktion des optischen Systems des Kamerasystems 12 dargestellt. Bei der Rekonstruktion werden die Helligkeitswerte mit Hilfe der Punktübertragungsfunktion invertiert, sodass die tatsächliche Abbildungsgröße des in Figur 14 dargestellten Objekts, die tatsächliche Lichtstärke des vom Objekt abgestrahlten Lichts und/oder die tatsächliche Position des Objekts ermittelt werden können.

## Patentansprüche

1. Verfahren zum Verarbeiten von Bilddaten,
bei dem die Bilddaten mindestens eines mit Hilfe einer einen Bilderfassungssensor mit rasterförmig angeordneten Bildpunkterfassungsbereichen aufweisenden Bilderfassungseinheit (12) bildpunktweise erfassten Bildes verarbeitet werden,
wobei mindestens ein Verlauf eines Farb- und/oder Helligkeitswertes über mindestens zwei Bildpunkterfassungsbereiche ermittelt wird, der auf die Intensitätsverteilung durch das optische System der Bilderfassungseinheit (12) beim Abbilden eines Licht abstrahlunden oder reflektierenden Objekts auf die Bildpunkterfassungsbereiche zurückzuführen ist, dessen Abbildung auf der durch die Bildpunkterfassungsbereiche gebildeten Sensorfläche ohne diese Intensitätsverteilung kleiner oder gleich der Größe eines Bildpunkterfassungsbereichs wäre, **dadurch gekennzeichnet, dass**
abhängig vom ermittelten Verlauf des Farb- und/oder Helligkeitswertes und/oder von der in mindestens einem Bildpunkterfassungsbereich ermittelten Amplitude des Farb- und/oder Helligkeitswertes die tatsächliche Abbildungsgröße des Objekts und/oder die tatsächliche Position der Abbildung des Objekts ohne die durch das optische System der Bilderfassungseinheit (12) verursachte Intensitätsverteilung ermittelt werden, und dass die ermittelte Position und/oder die ermittelte tatsächliche Größe der Abbildung des Objekts zur Klassifizierung des Objekts mit Hilfe eines Klassifikators verarbeitet werden.

2. Verfahren nach Anspruch 1, **dadurch gekennzeichnet, dass** mindestens ein Vergleichsamplitudenwert des tatsächlichen Bildwertes voreingestellt wird, und
dass die durch die Intensitätsverteilung auf die mindestens zwei Bildpunkterfassungsbereiche verteilte Lichtmenge des vom abgebildeten Objekt abgestrahlten und auf diese Bildpunkterfassungsbereiche auftreffenden Lichts ermittelt wird, wobei abhängig von dem Vergleichsamplitudenwert die tatsächliche Abbildungsgröße des Objekts ermittelt wird.

3. Verfahren nach einem der vorhergehenden Ansprüche, **dadurch gekennzeichnet, dass** der mindestens ein Vergleichsamplitudenwert einer der Mindestlichtstärke, der zulässigen Maximallichtstärke und/oder der üblichen Lichtstärke einer Leuchte eines Kraftfahrzeugs entspricht.

4. Verfahren nach einem der vorhergehenden Ansprüche, **dadurch gekennzeichnet, dass** die Mindestlichtstärke und die zulässige Maximallichtstärke in den ECE-Regelungen und/oder in den von der Societey of Automotive Engineers herausgegebenen Reglungen definiert sind, und dass die übliche Lichtstärke der durchschnittlichen Lichtstärke einer Leuchte von aktuellen PKW und/oder LKW-Modellen entspricht.

5. Verfahren nach einem der vorhergehenden Ansprüche, **dadurch gekennzeichnet, dass** mehrere Vergleichsamplitudenwerte voreingestellt werden, die jeweils der Lichtstärke einer Leuchte und/oder einer Mindestlichtstärke, zulässigen Maximallichtstärke und/oder üblichen Lichtstärke entsprechen.

6. Verfahren nach einem der vorhergehenden Ansprüche, **dadurch gekennzeichnet, dass** aufgrund der Lichtverteilung des vom Objekt abgestrahlten und auf die mindestens zwei Bildpunkterfassungsbereiche auftreffenden Lichts eine Position der Abbildung des Objekts auf der Sensoroberfläche unabhängig von den rasterförmig angeordneten Bildpunkterfassungsbereichen oder durch Angabe der Position der Abbildung mit Hilfe mindestens eines Subbildpunkterfassungsbereichs ermittelt wird.

7. Verfahren nach einem der vorhergehenden Ansprüche, **dadurch gekennzeichnet, dass** mit Hilfe mindestens einer bekannten Aberration des optischen Systems der Bilderfassungseinheit (12) und dem ermittelten Verlauf des Farb- und/oder Helligkeitswertes die tatsächliche Position der Abbildung des Objekts auf der Sensorfläche ermittelt wird.

8. Verfahren nach einem der vorhergehenden Ansprüche, **dadurch gekennzeichnet, dass** die tatsächliche Abbildungsgröße des Objekts auf der Sensorfläche und/oder dass die tatsächliche Position des Objekts auf der Sensorfläche ermittelt wird.

9. Verfahren nach einem der vorhergehenden Ansprüche, bei dem die Bildpunkterfassungsbereiche in einer Bildebene der Bilderfassungseinheit (12) angeordnet sind.

10. Verfahren nach einem der vorhergehenden Ansprüche, **dadurch gekennzeichnet, dass** die Intensitätsverteilung der Punktübertragungsfunktion der Bilderfassungseinheit (12) bei der Abbildung des Objekts bewirkt wird.

11. Verfahren nach einem der vorhergehenden Ansprüche, **dadurch gekennzeichnet, dass** zum Ermitteln der tatsächlichen Abbildungsgröße des Objekts und/oder zum Ermitteln der tatsächlichen Position des Objekts ein Dekonvolutionsverfahren genutzt wird.

12. Verfahren nach einem der vorhergehenden Ansprüche, **dadurch gekennzeichnet, dass** das Bild mit Hilfe einer in einem Kraftfahrzeug angeordneten Bilderfassungseinheit (12), vorzugsweise mit Hilfe einer monokularen Frontkamera oder einer Stereokamera, erfasst wird.

13. Verfahren nach einem der vorhergehenden Ansprüche, **dadurch gekennzeichnet, dass** mit Hilfe der Bilderfassungseinheit (12) mehrere Bilder nacheinander ermittelt werden, deren Bilddaten wiederholt verarbeitet werden, wobei die tatsächliche Position der Abbildung des Objekts ermittelt wird und über mehrere nacheinander aufgenommene Bilder verfolgt wird, vorzugsweise mit Hilfe eines Trackingverfahrens.

14. Vorrichtung zum Ermitteln und Verarbeiten von Bilddaten,
mit einer Bilderfassungseinheit (12), die einen Bilderfassungssensor mit rasterförmig angeordneten Bildpunkterfassungsbereichen zum bildpunktweisen Erfassen eines Bildes aufweist, wobei die Bilderfassungseinheit (12) dem Bild entsprechende Bilddaten erzeugt,
die mindestens ein Verlauf eines Farb- und/oder Helligkeitswertes über mindestens zwei Bildpunkterfassungsbereiche ermittelt, der auf die Intensitätsverteilung durch das optische System der Bilderfassungseinheit (12) beim Abbilden eines Licht abstrahlunden oder reflektierenden Objekts auf die Bildpunkterfassungsbereiche zurückzuführen ist, dessen Abbildung auf der durch die Bildpunkterfassungsbereiche gebildeten Sensorfläche in der Bildebene ohne diese Intensitätsverteilung kleiner oder gleich der Größe eines Bildpunkterfassungsbereich wäre, **dadurch gekennzeichnet dass** die Vorrichtung abhängig vom ermittelten Verlauf des Farb- und/oder Helligkeitswertes und/oder von der in mindestens einem Bildpunkterfassungsbereich ermittelten Amplitude des Farb- und/oder Helligkeitswertes die tatsächliche Abbildungsgröße des Objekts und/oder die tatsächliche Position der Abbildung des Objekts ohne die durch das optische System der Bilderfassungseinheit (12) verursachte Intensitätsverteilung ermittelt und dass die ermittelte Position und/oder die ermittelte tatsächliche Größe der Abbildung des Objekts zur Klassifizierung des Objekts mit Hilfe eines Klassifikators verarbeitet.

## Claims

1. Method for processing image data,
whereby the image data of at least one image point-wise captured by means of an image capturing unit (12) provided with an image capturing sensor with image point capturing areas arranged in a grid-like manner,
wherein at least a course of a colour value and/or a brightness value over at least two image point capturing areas is determined resulting from the intensity distribution by the optical system of the image capturing unit (12) during projection of a light-emitting or reflecting object onto the image point capturing areas the image of which formed on the sensor surface by means of the image point capturing areas would be smaller than or equal to the size of an image point capturing area, **characterized in that**
depending on the determined course of the colour value and/or the brightness value and/or of the amplitude determined in at least one image point capturing area of the colour value and/or the brightness value the real image size of the object and/or the real position of the image of the object are determined without the intensity distribution caused by the optical system of the image capturing unit (12), and that the determined position and/or the determined real size of the image of the object are processed for classifying the object by means of a classificator.

2. Method according to claim 1, **characterized in that** at least one comparison amplitude value of the real image value is preset, and
**in that** the light quantity distributed by means of the intensity distribution to the at least two image point capturing areas of the light emitted by the imaged object and falling onto these image point capturing areas is determined, wherein depending on the comparison amplitude value the real image size of the object is determined.

3. Method according to one of the preceding claims, **characterized in that** the at least one comparison amplitude value corresponds to one of the minimum light intensity, to the admissible maximum light intensity and/or to the usual light intensity of a headlamp of a vehicle.

4. Method according to one of the preceding claims, **characterized in that** the minimum light intensity and the admissible maximum light intensity are defined in the ECE regulations and/or in the regulations issued by the Society of Automotive Engineers, and **in that** the usual light intensity corresponds to the average light intensity of a headlamp of conventional models of passenger vehicles and/or heavy goods vehicles.

5. Method according to one of the preceding claims, **characterized in that** several comparison amplitude values are preset that each correspond to the light intensity of a headlamp and/or to a minimum light intensity, to the maximum light intensity and/or to the usual light intensity.

6. Method according to one of the preceding claims, **characterized in that** due to the light distribution of the light emitted by the object and falling onto the at least two image point capturing areas a position of the image of the object on the sensor surface is determined independent of the grid-like arranged image point capturing areas or by means of indicating the position of the image by means of at least one subimage point capturing area.

7. Method according to one of the preceding claims, **characterized in that** by means of at least one known aberration of the optical system of the image capturing unit (12) and the determined course of the colour value and/or brightness value the real position of the image of the object on the sensor surface is determined.

8. Method according to one of the preceding claims, **characterized in that** the real image size of the object on the sensor surface and/or that the real position of the object on the sensor surface is determined.

9. Method according to one of the preceding claims, wherein the image point capturing areas are arranged in an image plane of the image capturing unit (12).

10. Method according to one of the preceding claims, **characterized in that** the intensity distribution of the point transfer function of the image capturing unit (12) is effected when imaging the object.

11. Method according to one of the preceding claims, **characterized in that** for determining the real image size of the object and/or for determining the real position of the object a deconvolution method is used.

12. Method according to one of the preceding claims, **characterized in that** the image is captured by means of an image capturing unit (12) arranged in a vehicle, preferably by means of a monocular front camera or a stereo camera.

13. Method according to one of the preceding claims, **characterized in that** by means of the image capturing unit (12) several images are determined successively, the image data of which are processed repeatedly, wherein the real position of the image of the object is determined and is followed via several images which have been taken in sequence, preferably by means of a tracking procedure.

14. Device for determining and processing image data,
comprising an image capturing unit (12) provided with an image capturing sensor with image point capturing areas that are arranged in a grid-like manner in order to capture an image image-point wise, wherein the image capturing unit (12) generates image data corresponding to the image,
that at least determines a course of a colour value and/or a brightness value over at least two image point capturing areas resulting from the intensity distribution by means of the optical system of the image capturing unit (12) during projection of a light-emitting or reflecting object onto the image point capturing areas the imaging of which onto the sensor surface in the image plane formed by the image point capturing areas without this intensity distribution would be smaller than or equal to the size of an image point capturing area, **characterized in that** the device, depending on the determined course of the colour value and/or the brightness value and/or of the amplitude determined in at least one image point capturing area of the colour value and/or the brightness value, the real image size of the object and/or the real position of the image of the object are determined without the intensity distribution caused by the optical system of the image capturing unit (12), and **in that** the determined position and/or the determined real size of the image of the object is processed for classifying the object by means of a classificator.

## Revendications

1. Procédé de traitement de données d'image,
selon lequel les données d'image d'au moins une image détectée pixel par pixel au moyen d'une unité de détection d'image (12) comprenant un capteur de détection d'image doté de zones de détection de pixel disposées en trame sont traitées,
au moins une variation d'une valeur de couleur et/ou de luminosité au-dessus d'au moins deux zones de détection de pixel étant déterminée, ladite variation devant être imputée à la répartition des intensités par le système optique de l'unité de détection d'image (12) lors de la reproduction d'un objet émettant ou réfléchissant de la lumière sur les zones de détection de pixel, objet dont la reproduction sur la surface de détection formée par les zones de détection d'image sans cette répartition des intensités serait inférieure ou égale à la grandeur d'une zone de détection de pixel, **caractérisé en ce que**
la grandeur de reproduction effective de l'objet et/ou la position effective de la reproduction de l'objet sans la répartition des intensités provoquée par le système optique de l'unité de traitement d'image (12) sont déterminées en fonction de la variation déterminée de la valeur de couleur et/ou de luminosité et/ou de l'amplitude de la valeur de couleur et/ou de luminosité déterminée dans au moins une zone de détection de pixel, et **en ce que** la position déterminée et/ou la grandeur effective déterminée de la reproduction de l'objet sont traitées au moyen d'un classificateur pour effectuer la classification de l'objet.

2. Procédé selon la revendication 1, **caractérisé en ce qu'**au moins une valeur d'amplitude de référence de la valeur d'image effective est préréglée, et
**en ce que** la quantité de lumière émise par l'objet reproduit et incidente sur ces zones de détection de pixel, répartie par la répartition des intensités sur les deux zones de détection de pixel ou plus, est déterminée, la grandeur de reproduction effective de l'objet étant déterminée en fonction de la valeur d'amplitude de référence.

3. Procédé selon l'une quelconque des revendications précédentes, **caractérisé en ce que** la ou les valeurs d'amplitude de référence correspondent à une intensité parmi l'intensité lumineuse minimale, l'intensité lumineuse maximale admissible et/ou l'intensité lumineuse habituelle d'un phare d'un véhicule automobile.

4. Procédé selon l'une quelconque des revendications précédentes, **caractérisé en ce que** l'intensité lumineuse minimale et l'intensité lumineuse maximale admissible sont définies dans les règlements ECE et/ou dans les règlements édités par la Société des ingénieurs automobiles, et **en ce que** l'intensité lumineuse habituelle de l'intensité lumineuse moyenne correspond à un phare de modèles actuels de voiture et/ou de camion.

5. Procédé selon l'une quelconque des revendications précédentes, **caractérisé en ce que** plusieurs valeurs d'amplitude de référence correspondant respectivement à l'intensité lumineuse d'un phare et/ou à une intensité lumineuse minimale, une intensité lumineuse maximale admissible et/ou une intensité lumineuse habituelle sont préréglées.

6. Procédé selon l'une quelconque des revendications précédentes, **caractérisé en ce qu'**en raison de la répartition lumineuse de la lumière émise par l'objet et incidente sur les deux zones de détection de pixel ou plus, une position de la reproduction de l'objet sur la surface de détection est déterminée indépendamment des zones de détection de pixel disposées en trame ou grâce à l'indication de la position de la reproduction au moyen d'une sous-zone de détection de pixel.

7. Procédé selon l'une quelconque des revendications précédentes, **caractérisé en ce que** la position effective de la reproduction de l'objet sur la surface de détection est déterminée au moyen d'au moins une aberration connue du système optique de l'unité de détection d'image (12) et de l'évolution déterminée de la valeur de couleur et/ou de luminosité.

8. Procédé selon l'une quelconque des revendications précédentes, **caractérisé en ce que** la grandeur de reproduction effective de l'objet sur la surface de détection et/ou la position effective de l'objet sur la surface de détection est déterminée.

9. Procédé selon l'une quelconque des revendications précédentes, selon lequel les zones de détection de pixel sont disposées dans un plan d'image de l'unité de détection d'image (12).

10. Procédé selon l'une quelconque des revendications précédentes, **caractérisé en ce que** la répartition des intensités de la fonction de transfert de point de l'unité de détection d'image (12) est effectuée lors de la reproduction de l'objet.

11. Procédé selon l'une quelconque des revendications précédentes, **caractérisé en ce qu'**un procédé de déconvolution est utilisé pour déterminer la grandeur de reproduction effective de l'objet et/ou pour déterminer la position effective de l'objet.

12. Procédé selon l'une quelconque des revendications précédentes, **caractérisé en ce que** l'image est détectée au moyen d'une unité de détection d'image (12) disposée dans un véhicule automobile, de préférence au moyen d'une caméra avant monoculaire ou d'un appareil photo caméra.

13. Procédé selon l'une quelconque des revendications précédentes, **caractérisé en ce que** plusieurs images dont les données sont traitées à plusieurs reprises sont déterminées successivement au moyen de l'unité de détection d'image (12), la position effective de la reproduction de l'objet étant déterminée et étant poursuivie sur plusieurs images enregistrées successivement, de préférence au moyen d'un procédé de localisation.

14. Dispositif de détermination et de traitement de données d'image,
doté d'une unité de détection d'image (12) comprenant un capteur de détection d'image doté de zones de détection de pixel disposées en trame et destiné à détecter une image pixel par pixel, l'unité de détection d'image (12) produisant des données d'image correspondant à l'image,
ladite unité déterminant au moins une variation d'une valeur de couleur et/ou de luminosité au-dessus d'au moins deux zones de détection de pixel, ladite variation devant être imputée à la répartition des intensités par le système optique de l'unité de détection d'image (12) lors de la reproduction d'un objet émettant ou réfléchissant de la lumière sur les zones de détection de pixel, objet dont la reproduction sur la surface de détection formée par les zones de détection d'image dans le plan de l'image sans cette répartition des intensités serait inférieure ou égale à la grandeur d'une zone de détection de pixel, **caractérisé en ce que** le dispositif détermine, en fonction de la variation déterminée de la valeur de couleur et/ou de luminosité et/ou de l'amplitude de la valeur de couleur et/ou de luminosité déterminée dans au moins une zone de détection de pixel, la grandeur de reproduction effective de l'objet et/ou la position effective de la reproduction de l'objet sans la répartition des intensités provoquée par le système optique de l'unité de traitement d'image (12), et **en ce que** la position déterminée et/ou la grandeur effective déterminée de la reproduction de l'objet sont traitées au moyen d'un classificateur pour effectuer la classification de l'objet.
